# EUROPÄISCHE PATENTSCHRIFT

(11) **EP 3 532 332 B1**
(45) Veröffentlichungstag und Bekanntmachung des Hinweises auf die Patenterteilung: **28.12.2022**
(21) Anmeldenummer: 17767819.0
(22) Anmeldetag: 13.09.2017
(51) Int. Cl.: B60K 35/00, B60K 37/06, G06F 3/041, G06F 3/0488

(54) **VERFAHREN UND VORRICHTUNG ZUR BLICKWINKELABHÄNGIGEN DARSTELLUNG EINER GRAFISCHEN BENUTZERSCHNITTSTELLE**
METHOD AND DEVICE FOR THE VIEWING ANGLE-DEPENDENT REPRESENTATION OF A GRAPHIC USER INTERFACE
PROCÉDÉ ET DISPOSITIF DE REPRÉSENTATION D'UNE INTERFACE UTILISATEUR GRAPHIQUE EN FONCTION DE L'ANGLE D'OBSERVATION

(30) Priorität: 26.10.2016 DE 102016221072
(43) Veröffentlichungstag der Anmeldung: 04.09.2019
(73) Patentinhaber: Volkswagen Aktiengesellschaft, 38440 Wolfsburg (DE)
(72) Erfinder: RHEDE, Johannes, 10115 Berlin (DE); TEMMING, Carsten, 38106 Braunschweig (DE); TÜMLER, Johannes, 39167 Wellen (DE); LEIBER, Paul, 38102 Braunschweig (DE); WITTKÄMPER, Michael, 38106 Braunschweig (DE)
(86) Internationale Anmeldenummer: PCT/EP2017/073025
(87) Internationale Veröffentlichungsnummer: WO 2018/077531

(56) Entgegenhaltungen:
- WO-A1-2004/016460
- DE-A1- 10 140 688
- DE-A1-102007 034 272
- JP-A- 2005 244 574

## Beschreibung

### Gebiet der Erfindung

Die vorliegende Erfindung betrifft ein Verfahren und eine Vorrichtung zur blickwinkelabhängigen Darstellung einer grafischen Benutzerschnittstelle. Die vorliegende Erfindung betrifft weiterhin ein Fahrzeug, das eingerichtet ist, ein solches Verfahren auszuführen oder eine solche Vorrichtung aufweist.

### Hintergrund der Erfindung

Neben herkömmlichen Single-View-Displays werden in Kraftfahrzeugen inzwischen auch sogenannte Dual-View-Displays eingesetzt, die auf einem Bildschirm in zwei verschiedenen Blickwinkeln eine Anzeige unterschiedlicher Bildinhalte ermöglichen. Eine Anordnung im Bereich der Mittelkonsole zwischen Fahrer und Beifahrer erlaubt diesen simultan unterschiedliche Darstellungen auf dem Display sehen. So können beispielsweise dem Fahrer verkehrsrelevante oder fahrzeugbezogene Informationen und dem Beifahrer Infotainment-Inhalte angezeigt werden. Der Fahrer erhält damit die Informationen, die er für die Fahraufgabe benötigt, wird aber nicht von Inhalten, die für den Beifahrer wiedergegeben werden abgelenkt.

Dual-View-Displays beruhen üblicherweise auf einer Parallaxenbarriere, die einem TFT-Display vorgeschaltet ist und aus einer Flüssigkristallschicht besteht, die je nach Bedarf und Betrachtungswinkel lichtdurchlässig oder lichtundurchlässig geschaltet werden kann. Für den Blick von links und rechts auf das Display wird die Parallaxenbarriere alternierend für einen der beiden Blickwinkel lichtdurchlässig geschaltet. Die verschiedenen Darstellungen für die beiden Blickwinkel werden im gleichen Takt umgeschaltet wie die Parallaxenbarriere. Als Alternative zu einem Dual-View-Display mit Parallaxenbarriere kann auch ein auf einem ähnlichen Prinzip beruhendes Lentikularlinsen-Display verwendet werden. Bei diesem sorgt ein auf der Displayoberfläche befindliches Array mit Zylinderlinsen für eine Trennung der beiden Darstellungen. Auch hier sind die Bildpunkte für die beiden Blickwinkel in horizontaler Richtung ineinander verschachtelt, es wird aber nicht wie bei der Parallaxenbarriere jeweils ein Teil des Lichts blockiert, sondern durch das Linsenarray für die beiden Blickwinkel in unterschiedliche Richtungen abgelenkt.

Für das obige Beispiel bedeutet dies, dass zu dem Zeitpunkt, zu dem für den Fahrer die verkehrsrelevanten oder fahrzeugbezogenen Informationen angezeigt werden, für den Beifahrer keine Anzeige auf dem Display erfolgt. Wird dann die Parallaxenbarriere umgeschaltet, so wird der Blick für den Beifahrer auf die Infotainment-Inhalte freigegeben, der Fahrer hat in diesem Moment dann keinen freien Blick auf die Navigationsanzeige. Der Takt, mit dem die Parallaxenbarriere umgeschaltet wird, wird hierbei ausreichend hoch gewählt, sodass für beide Blickwinkel keine Unterbrechung der Anzeige wahrnehmbar ist und eine angenehme Betrachtung gegeben ist. Da aber dennoch zwei räumlich ineinander verschachtelte Teilbilder generiert werden, für die in horizontaler Richtung jeweils nur die Hälfte der Pixel des Displays genutzt werden, haben die Anzeigen in horizontaler Richtung nur die Hälfte der maximal möglichen Auflösung des Displays.

Der Aufbau und die Verwendung solcher Dual-View-Displays in einem Kraftfahrzeug wird beispielsweise in der DE 101 40 688 A1 und der JP 2005 244574 A beschreiben. Ferner offenbart die WO 2004/016460 A1 ein Multi-View-Display für ein Fahrzeug, welches zwischen einem Multi-View-Zustand und einem Single-View-Zustand umgeschaltet werden kann, wobei bei der Darstellung von für beide Betrachter gleichen Bildern in dem Single-View-Zustand eine höhere Auflösung vorliegt als bei der Darstellung von für die Betrachter verschiedenen Bildern in dem Multi -View-Zustand.

Für eine Bedienung von auf dem Display dargestellten Bedienelementen kann diese mit einer berührungsempfindlichen Oberfläche versehen sein. Für eine Interaktion werden hierbei auf einer grafischen Benutzeroberfläche bzw. Benutzerschnittstelle (abgekürzt GUI von englisch "Graphical User Interface") häufig Bedienelemente in Form von Bildsymbolen dargestellt, die mit Computeranwendungsprogrammen, kurz Anwendungen (englisch "Apps"), verknüpft sein können. Die Anwendungen werden dann durch Anwählen eines Bildsymbols gestartet und über die grafische Benutzeroberfläche bedient.

Bei einem Single-View-Display werden Fahrer und Beifahrer ein identischer Bildinhalt mit identischen Bedienelementen angezeigt, sodass eine Betätigung der Bedienelemente unabhängig davon ist, der die Bedienung vorgenommen hat. Werden dagegen auf einem Dual-View-Display mit Touchscreen-Bedienung Fahrer und Beifahrer unterschiedliche, voneinander unabhängige Bildinhalte mit Bedienelementen für diese unterschiedlichen Bildinhalte angezeigt, so kann es, wenn nicht unterschieden wird ob eine Betätigung von dem Fahrer oder dem Beifahrer vorgenommen wurde, zu Fehlbedienung kommen.

Werden beispielsweise dem Fahrer eine Navigationskarte und dem Beifahrer Videoinhalte angezeigt, die jeweils mit auf dem Touchscreen dargestellten Bedienelementen bedient werden können, so unterscheiden sich die den Bedienelementen zugeordneten Funktionen je nachdem ob sie mit den Bildinhalten für den Fahrer oder Beifahrer verknüpft sind. So kann beispielsweise für den Fahrer ein Bedienelement für eine Menüeingabe für das Fahrtziel und für den Beifahrer ein Bedienelement für eine Menüeingabe für das Anhalten oder Starten der Videowiedergabe vorgesehen sein. Insbesondere wenn das Bedienelement für den Fahrer und das Bedienelement für den Beifahrer derselben Stelle auf dem Display verortet sind, kann es zu Fehlbedienung kommen, beispielsweise in dem eine Eingabe des Fahrers zum Anhalten oder Starten der Videowiedergabe führt. Aber selbst wenn die Bedienelemente für Fahrer und Beifahrer an verschiedenen Stellen auf dem Display angeordnet sind, kann ein Bedienungsfehler nicht ausgeschlossen werden.

Um solche Fehlbedienungen zu vermeiden, offenbaren die US 2008/0186282 A1 und die US 2014/0204033 A1 bei einer Verwendung von Dual-View-Displays mit Touchscreen-Bedienung in einem Fahrzeug Sensoren vorzusehen, die eine Unterscheidung ermöglichen, ob die Bedienung durch den Fahrer oder Beifahrer vorgenommen wird. Auch die DE 10 2007 034 272 A1 offenbart ein Anzeige- und Bediensystem für ein Kraftfahrzeug mit einer Dual-View-Anzeigevorrichtung, bei dem eine Betätigung eines Betätigungselements einem der Betrachtungswinkelbereiche zugeordnet wird, wobei eine diese Zuordnung kennzeichnende Aktivierungsinformation grafisch angezeigt wird.

### Zusammenfassung der Erfindung

Es ist eine Aufgabe der Erfindung, ein verbessertes Verfahren zur blickwinkelabhängigen Darstellung einer grafischen Benutzerschnittstelle zur Verfügung zu stellen, dass insbesondere nach einem Kraftfahrzeug eingesetzt werden kann.

Diese Aufgabe wird durch ein Verfahren mit den Merkmalen des Anspruchs 1, sowie durch eine entsprechende Vorrichtung gemäß Anspruch 6 gelöst. Bevorzugte Ausgestaltungen der Erfindung sind Gegenstand der abhängigen Ansprüche.

Bei dem erfindungsgemäßen Verfahren zur blickwinkelabhängigen Darstellung einer grafischen Benutzerschnittstelle werden unterschiedliche Darstellungen der gleichen Bild-und/oder Bedieninhalte in verschiedenen Blickwinkeln anzeigt, wobei mindestens ein Bedienelement für unterschiedliche Blickwinkel die gleiche Funktion ausübt und an der gleichen Position auf der dargestellten grafischen Benutzerschnittstelle verortet ist.

Dieses ermöglicht bei gemeinsamer Nutzung der grafischen Benutzerschnittstelle, beispielsweise durch Fahrer und Beifahrer eines Fahrzeugs, bei gleichen Bedieninhalten eine unterschiedliche Gestaltung der Anzeige, wobei ohne die Verwendung von Sensoren eine Fehlbedienung ausgeschlossen werden kann.

Gemäß einer Ausführungsform der Erfindung erfolgt die Darstellung auf einem Dual-View-Display, dass in einem ersten Blickwinkel eine erste Darstellung der Bild- und/oder Bedieninhalte und in einem zweiten Blickwinkel eine zweite Darstellung der gleichen Bild-und/oder Bedieninhalte anzeigt.

Vorteilhafterweise unterscheiden sich die Darstellungen der gleichen Bild- und/oder Bedieninhalte in den beiden Blickwinkeln durch einen unterschiedlichen Detailgrad.

Erfindungsgemäß ist für die beiden Blickwinkel ein erster Teil der Bild- und/oder Bedienelemente gleich und ein zweiter Teil der Bild- und/oder Bedienelemente verschieden, wobei für den ersten Teil alle Bildpunkte des Dual-View-Displays zur Darstellung der Bild-und/oder Bedienelemente genutzt werden und für den zweiten Teil je Blickwinkel nur ein Teil der Bildpunkte des Dual-View-Displays genutzt wird.

Auf diese Weise kann für den Teilbereich, der für Fahrer und Beifahrer gleich dargestellt wird, die volle Auflösung des Displays genutzt werden und damit einer besonders detailreiche Darstellung erzielt werden.

Gemäß einer vorteilhaften Ausführungsform der Erfindung ist das Dual-View-Display in einem Fahrzeug so zwischen der Fahrer- und der Beifahrerposition angeordnet, dass die erste Darstellung der Bild- und/oder Bedieninhalte aus der Fahrerposition und die zweite Darstellung der gleichen Bild- und/oder Bedieninhalte aus der Beifahrerposition wahrgenommen werden kann.

Weiterhin umfasst bei dieser Weiterbildung die Anzeige die gleichen Bedieninhalte für Fahrer und Beifahrer, wobei die beiden Darstellungen einen unterschiedlichen Detailgrad aufweisen, der durch die Fahraufgabe und/oder eine Individualisierung und/oder den Schutz der Privatsphäre von Fahrer oder Beifahrer bestimmt wird.

Entsprechend umfasst eine erfindungsgemäße Vorrichtung zur blickwinkelabhängigen Darstellung einer grafischen Benutzerschnittstelle
- eine Anzeigevorrichtung, die in verschiedenen Blickwinkeln verschiedene Bildinhalte anzeigt,
- mindestens ein Bedienelement;
- eine Steuereinheit, der eine Information über eine mit dem Bedienelement vorgenommene Nutzereingabe zugeführt wird; und
- eine Bilderzeugungs- und ausgabeeinheit, die von der Steuereinheit so angesteuert wird, dass unterschiedliche Darstellungen der gleichen Bild- und/oder Bedieninhalte in verschiedenen Blickwinkeln anzeigt werden, wobei mindestens ein Bedienelement für unterschiedliche Blickwinkel die gleiche Funktion ausübt und/oder an der gleichen

Position auf der dargestellten grafischen Benutzerschnittstelle verortet ist. Vorzugsweise ist die Anzeigevorrichtung als Dual-View-Display ausgestaltet und weist eine berührungsempfindliche Oberfläche zum Erfassen von Bedieneingaben auf.

Vorzugsweise wird das erfindungsgemäße Verfahren oder die erfindungsgemäße Vorrichtung in einem Kraftfahrzeug eingesetzt.

Weitere Merkmale der vorliegenden Erfindung werden aus der nachfolgenden Beschreibung und den Ansprüchen in Verbindung mit den Figuren ersichtlich.

### Kurze Beschreibung der Figuren

- Fig. 1: zeigt schematisch ein Blockschaltbild einer erfindungsgemäßen Vorrichtung;
- Fig. 2: zeigt schematisch eine erste erfindungsgemäße Anzeige gleicher Bedieninhalte für Fahrer und Beifahrer eines Fahrzeugs mit unterschiedlichem Detailgrad bei gleichen Bediengrundfunktionen und gleicher Verortung;
- Fig. 3: zeigt schematisch eine zweite erfindungsgemäße Anzeige gleicher Bedieninhalte für Fahrer und Beifahrer bei gleichen Bedienfunktionen mit individualisierter Hintergrundgestaltung für den Beifahrer; und
- Fig. 4: zeigt schematisch eine dritte erfindungsgemäße Anzeige, bei dem ein Teil der Bildinhalte nur dem berechtigten Nutzer angezeigt werden.

### Detaillierte Beschreibung der Ausführungsformen

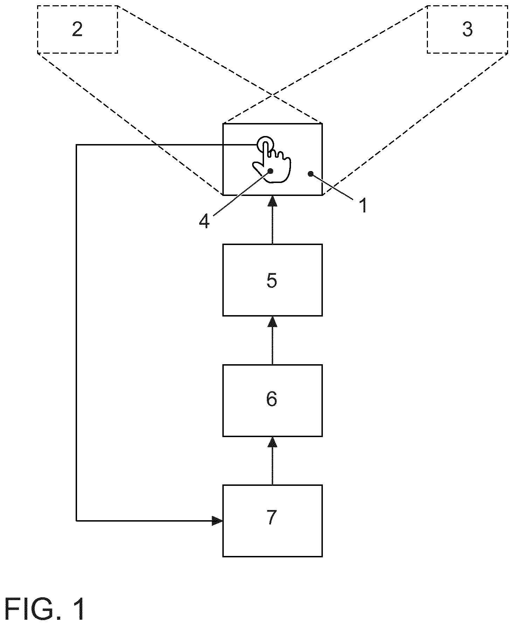

Figur 1 zeigt schematisch ein Blockschaltbild einer erfindungsgemäßen Vorrichtung zur blickwinkelabhängigen Darstellung einer grafischen Benutzerschnittstelle, wie sie vorzugsweise in einem Kraftfahrzeug eingesetzt werden kann. Eine Anzeigevorrichtung 1 in Form eines Dual-View-Displays zeigt in verschiedenen Blickwinkeln unterschiedliche Darstellungen 2, 3 der gleichen Bild- und/oder Bedieninhalte an. Insbesondere übt hierbei mindestens ein Bedienelement für unterschiedliche Blickwinkel die gleiche Funktion aus und ist für beide Blickwinkel an der gleichen Position auf der dargestellten grafischen Benutzerschnittstelle verortet.

Eine Bedienung der angezeigten Bildinhalte, wie beispielsweise ein Navigieren in einer Menüstruktur oder das Bedienen eines Mediaplayers, kann auf unterschiedliche Weisen erfolgen. So kann der Fahrer auf Bedienelemente eines Multifunktionslenkrades zurückgreifen, es kann stattdessen oder zusätzlich aber auch eine Gesten- oder Sprachsteuerung durch Fahrer oder Beifahrer erfolgen. Besonders intuitiv ist die Bedienung wenn das Dual-View-Display als Touchscreen-Display ausgestaltet ist. In diesem Fall wird eine Berührung der Oberfläche mit einem oder mehreren Fingern des Fahrers oder Beifahrers an der Stelle eines auf dem Display dargestellten Bedienelements erfasst und eine Information über diesen Touch Event 4 einer Steuereinheit 7 zugeführt. In der Steuereinheit 7 werden Berührungspunkte und eine Veränderung dieser Berührungspunkte analysiert um zu ermitteln welche Bedienelemente bedient wurden und beispielsweise ein Antippen und Wischgesten zu unterscheiden. Die Steuereinheit steuert basierend auf diesen Informationen eine Bilderzeugungs- und ausgabeeinheit 6 an, die die Bildinhalte für die Darstellungen 2, 3 in den beiden Blickwinkeln generiert und gegebenenfalls auch auswertet, ob Teilbereiche mit identischen Bildinhalt vorliegen. Die Bildinhalte werden dann einer Ansteuereinheit 5 zugeführt, die die einzelnen Pixel des Displays und die davor befindliche Parallaxenbarriere so ansteuert, dass die verschiedenen Darstellungen 2, 3 für die beiden Blickwinkel wie gewünscht auf dem Display angezeigt werden

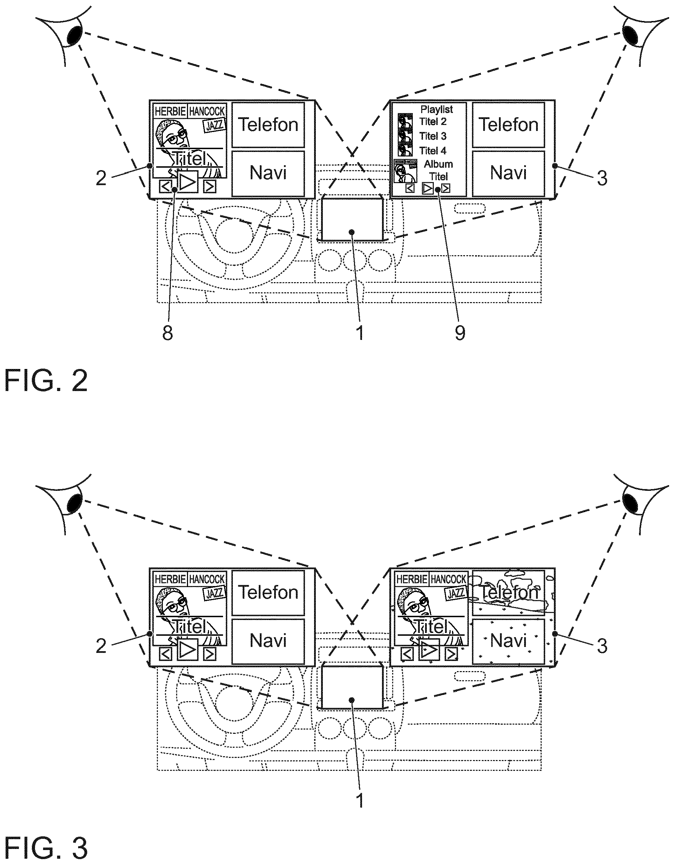

Figur 2 zeigt schematisch eine erste erfindungsgemäße Anzeige gleicher Bedieninhalte für Fahrer und Beifahrer mit unterschiedlichem Detailgrad bei gleichen Bediengrundfunktionen und gleicher Verortung. Angedeutet ist ein Teil des Fahrzeuginnenraums im Bereich des Armaturenbretts. Ein Dual-View-Display 1 ist rechts vom Lenkrad im Bereich der Mittelkonsole zwischen Fahrer und Beifahrer angeordnet. Das Dual-View-Display 1 kann eine vergleichsweise große Bildschirmdiagonale aufweisen und so insbesondere dem Beifahrer eine angenehme Betrachtung von Infotainment-Inhalten, wie beispielsweise Videos von einem im Fahrzeug integrierten Mediaplayer, ermöglichen. Zur Bedienung und Interaktion verschiedener Fahrzeugfunktionen und -systeme wird auf dem Dual-View-Display 1 für Fahrer und Beifahrer eine gemeinsame grafische Benutzerschnittstelle dargestellt, die zwar die gleichen Bild- und/oder Bedieninhalte aufweist aber blickwinkelabhängig ist und sich in ihrem Detailgrad unterscheidet.

Im vorliegenden Beispiel werden auf der grafischen Benutzerschnittstelle Bildsymbole wie Kacheln für eine Telefon-, eine Navigations- und eine Mediaplayeranwendung dargestellt. Die Mediaplayeranwendung steht hierbei im Fokus und kann von Fahrer und Beifahrer bedient werden. Aus diesem Grund ist die Kachel für die Mediaplayeranwendung größer als die Kacheln für die Telefon- und die Navigationsanwendung, wobei sich die Darstellung 2 für den Fahrer von der Darstellung 3 für den Beifahrer unterscheidet. Für den Fahrer steht hierbei eine schnelle und sichere Bedienung im Vordergrund um ihn möglichst wenig von der Fahraufgabe abzulenken. Aus diesem Grund weist die Darstellung des Mediaplayers für den Fahrer nur wenige Details, wie eine bildliche Darstellung des Plattencovers und eine Angabe des aktuell wiedergegebenen Titels, auf und ist mit einigen wenigen großen Bedienelementen 8 für Grundfunktionen des Mediaplayers, beispielsweise Wiedergabe("Play")- und Skip-Schaltflächen, versehen. Der Beifahrer dagegen kann, soweit er es wünscht, seine Aufmerksamkeit vollständig der Anzeige der grafischen Benutzerschnittstelle widmen. Daher kann die Darstellung des Mediaplayers für ihn einen höheren Detailgrad mit kleineren Bild-und Textdarstellungen aufweisen und visuell ansprechender gestaltet sein. So kann beispielsweise auch eine Playlist mit mehreren verschiedenen Titeln und jeweils entsprechendem Plattencover angezeigt werden. Die Bedienelemente 9 für den Mediaplayer sind hierbei für den Beifahrer an gleicher Stelle wie für den Fahrer verortet, können aber kleiner dargestellt werden, da dem Beifahrer für die Bedienung des Mediaplayers mehr Zeit zur Verfügung steht.

Da sowohl die Telefon- als auch die Navigationsanwendung nicht im Fokus stehen, kann für diese die Darstellung für Fahrer und Beifahrer identisch sein. Insbesondere kann, um die grafische Benutzerschnittstelle möglichst übersichtlich zu gestalten, für diese Anwendungen auf eine detaillierte Darstellung verzichtet werden und lediglich ein beschreibender Begriff wie "Telefon" oder "Navi" oder ein entsprechendes Bildsymbol dargestellt werden. Um eine dieser Anwendung in den Fokus zu bringen, kann beispielsweise eine Streichbewegung auf einer berührungsempfindlichen Oberfläche des Displays von der Kacheln der gewünschten Anwendung zu der Kacheln der gerade im Fokus stehenden Anwendung erfolgen, die zu einem Vertauschen der beiden Anwendungen führt.

Figur 3 zeigt eine Abwandlung der erfindungsgemäßen Anzeige aus Figur 2. Auch hier werden auf der grafischen Benutzerschnittstelle Kacheln für eine Telefon-, eine Navigations- und eine Mediaplayeranwendung dargestellt, wobei die Mediaplayeranwendung wieder im Fokus steht und entsprechend größer dargestellt ist. Die Darstellung 2 für den Fahrer unterscheidet sich auch hier von der Darstellung 3 für den Beifahrer. Die Darstellung 2 für den Fahrer entspricht der aus Figur 2. Bei der Darstellung 3 für den Beifahrer wird nun keine Playliste mehr angegeben, vielmehr ist für die Mediaplayeranwendung die Anzeige für Fahrer und Beifahrer gleich. Eine Individualisierung der Anzeige für den Beifahrer liegt hier in der Form vor, dass ein Hintergrundbild dargestellt wird das beispielsweise aus verschiedenen im Fahrzeug vorinstallierten Bildern oder aus einer Fotosammlung des Fahrers oder Beifahrers, die beispielsweise auf einem Mobiltelefon vorliegen kann, ausgewählt werden kann. Die Darstellung für den Beifahrer kann damit im Vergleich zu der Darstellung für den Fahrer ansprechender und individueller gestaltet werden auch wenn diese gegebenenfalls nicht mehr so übersichtlich und schnell zu erfassen ist.

Da die Anzeige der Kacheln für die Mediaplayeranwendung für Fahrer und Beifahrer gleich ist, können durch eine geeignete Ansteuerung des Dual-View-Displays für diese Bereiche alle Pixel in horizontaler Richtung genutzt werden, was eine bessere wahrgenommene Auflösung des Displays in diesen Bereichen ermöglicht.

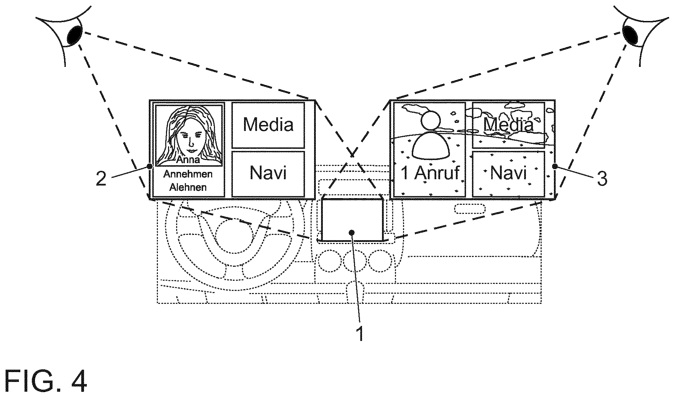

Figur 4 zeigt eine weitere Abwandlung der erfindungsgemäßen Anzeige, bei der zum Schutz der Privatsphäre eine Darstellung mit unterschiedlichem Detailgrad erfolgt. Im Fokus der grafischen Benutzerschnittstelle ist nun die Telefon-Anwendung. Die Darstellung für den Beifahrer ist, wie schon in Figur 3, mit einem Hintergrundbild individualisiert. Bei der Telefon-Anwendung wird nun der Beifahrer nur allgemein darüber informiert, dass gegenwärtig ein Anruf erfolgt. Von wem dieser Anruf erfolgt, ist dem Beifahrer aber nicht ersichtlich. Auch eine Bedienung der Telefon-Anwendung ist dem Beifahrer nicht möglich. Dem Fahrer dagegen wird der Anrufer, symbolisiert durch ein abgespeichertes Bild und/oder den Namen des Anrufers, angezeigt. Weiterhin ist es für den Fahrer möglich durch Betätigen entsprechender Bedienelemente den Anruf anzunehmen oder auch abzulehnen. Auf diese Weise ist es möglich, die Privatsphäre des Fahrers zu schützen wenn dieser nicht wünscht, dass private Inhalte auch dem Beifahrer angezeigt werden. Ebenso ist es möglich, die Privatsphäre des Beifahrers zu schützen und private Inhalte lediglich ihm, aber nicht auch dem Fahrer anzuzeigen.

In den obigen Ausführungsbeispielen werden zwei Darstellungen, jeweils eine für den Fahrer und eine für den Beifahrer, angezeigt. Die Erfindung ist jedoch nicht auf zwei Anzeigen beschränkt. Bei Verwendung geeigneter Displays können stattdessen in verschiedenen Richtungen auch mehr als zwei Anzeigen dargestellt werden. So ist es beispielsweise für eine Anwendung im Fahrzeug auch denkbar eine dritte Anzeige für Passagiere auf der Rückbank darzustellen. Diese dritte Anzeige kann ebenfalls individualisiert sein, so kann beispielsweise für Kinder auf der Rückbank eine buntere und verspieltere Darstellung erfolgen. Es kann hierbei sowohl vorgesehen sein, dass eine Bedienung der dargestellten Bildinhalte lediglich von Fahrer und/oder Beifahrer, beispielsweise mittels eines Touchscreens, nicht aber von der Rückbank aus vorgenommen werden kann. Ebenso kann aber auch für Passagiere auf der Rückbank eine Bedienung, beispielsweise durch eine Spracheingabe, vorgesehen sein.

Die Erfindung kann vorteilhaft im Bereich der Fahrzeugtechnik eingesetzt werden, ist aber keineswegs darauf beschränkt. Vielmehr kann die Erfindung in beliebigen computerbasierten Systemen verwendet werden, die eine blickwinkelabhängigen Darstellung einer grafischen Benutzerschnittstelle, insbesondere auf einem Dual-View-Display, ermöglichen.

### Bezugszeichenliste

- 1: Anzeigevorrichtung
- 2: Darstellung von Bild- und/oder Bedieninhalte in einem ersten Blickwinkel
- 3: Darstellung von Bild- und/oder Bedieninhalte in einem zweiten Blickwinkel
- 4: Touchscreen- Event
- 5: Ansteuereinheit
- 6: Bilderzeugungs- und Ausgabeeinheit
- 7: Steuereinheit
- 8: Bedienelemente für die Darstellung in dem ersten Blickwinkel
- 9: Bedienelemente für die Darstellung in dem zweiten Blickwinkel

## Patentansprüche

1. Verfahren zur blickwinkelabhängigen Darstellung einer grafischen Benutzerschnittstelle auf einem Dual-View-Display, bei dem in einem ersten Blickwinkel eine erste Darstellung (2) von Bild- und/oder Bedieninhalten und in einem zweiten Blickwinkel eine zweite Darstellung (3) von Bild- und/oder Bedieninhalten anzeigt wird, wobei für die beiden Blickwinkel zwei räumlich ineinander verschachtelte Teilbilder generiert werden und für die beiden Blickwinkel ein erster Teil der Bild- und/oder Bedienelemente gleich ist und ein zweiter Teil der Bild-und/oder Bedienelemente verschieden ist, **dadurch gekennzeichnet, dass** für den ersten Teil je Blickwinkel alle Bildpunkte des Dual-View-Displays zur Darstellung der Bild- und/oder Bedienelemente genutzt werden und für den zweiten Teil je Blickwinkel nur jeder zweite Bildpunkt des Dual-View-Displays genutzt wird.

2. Verfahren nach Anspruch 1, wobei in dem ersten Blickwinkel eine erste Darstellung (2) der Bild- und/oder Bedieninhalte und in dem zweiten Blickwinkel eine zweite Darstellung (3) der gleichen Bild- und/oder Bedieninhalte anzeigt wird und mindestens ein Bedienelement (8, 9) für unterschiedliche Blickwinkel die gleiche Funktion ausübt und an der gleichen Position auf der dargestellten grafischen Benutzerschnittstelle verortet ist.

3. Verfahren nach Anspruch 2, wobei sich die Darstellungen (2, 3) der gleichen Bild-und/oder Bedieninhalte in den beiden Blickwinkeln durch einen unterschiedlichen Detailgrad unterscheiden.

4. Verfahren nach einem der Ansprüche 2 oder 3, wobei das Dual-View-Display in einem Fahrzeug so zwischen der Fahrer- und der Beifahrerposition angeordnet ist, dass die erste Darstellung der Bild- und/oder Bedieninhalte aus der Fahrerposition und die zweite Darstellung der gleichen Bild- und/oder Bedieninhalte aus der Beifahrerposition wahrgenommen werden kann.

5. Verfahren nach Anspruch 4, wobei die Anzeige die gleichen Bedieninhalte für Fahrer und Beifahrer umfasst, wobei die beiden Darstellungen einen unterschiedlichen Detailgrad aufweisen, der durch die Fahraufgabe und/oder eine Individualisierung und/oder den Schutz der Privatsphäre von Fahrer oder Beifahrer bestimmt wird.

6. Vorrichtung zur blickwinkelabhängigen Darstellung einer grafischen Benutzerschnittstelle mit
- einem Dual-View-Display (1), bei dem in einem ersten Blickwinkel eine erste Darstellung (2) von Bild- und/oder Bedieninhalten und in einem zweiten Blickwinkel eine zweite Darstellung (3) von Bild- und/oder Bedieninhalten anzeigt wird, wobei für die beiden Blickwinkel zwei räumlich ineinander verschachtelte Teilbilder generiert werden ;
- mindestens einem Bedienelement (4);
- einer Steuereinheit (7), der eine Information über eine mit dem Bedienelement vorgenommene Nutzereingabe zugeführt wird; und
- einer Bilderzeugungs- und ausgabeeinheit (5, 6), die von der Steuereinheit (7) so angesteuert wird, dass für die beiden Blickwinkel ein erster Teil der Bild- und/oder Bedienelemente gleich ist und ein zweiter Teil der Bild- und/oder Bedienelemente verschieden ist,
**dadurch gekennzeichnet, dass**
- die Bilderzeugungs- und ausgabeeinheit (5, 6) von der Steuereinheit (7) so angesteuert wird, dass für den ersten Teil je Blickwinkel alle Bildpunkte des Dual-View-Displays zur Darstellung der Bild- und/oder Bedienelemente genutzt werden und für den zweiten Teil je Blickwinkel nur jeder zweite Bildpunkt des Dual-View-Displays genutzt wird.

7. Vorrichtung nach Anspruch 6, wobei das Dual-View-Display eine berührungsempfindliche Oberfläche zum Erfassen von Bedieneingaben aufweist.

8. Kraftfahrzeug **dadurch gekennzeichnet, dass** es eine Vorrichtung gemäß Anspruch 6 oder 7 aufweist oder eingerichtet ist, ein Verfahren gemäß einem der Ansprüche 1 bis 5 auszuführen.

## Claims

1. A method for displaying a graphical user interface in a viewing-angle-dependent manner on a dual-view display, with which, in a first viewing angle a first representation (2) of image and/or operating contents is displayed, and in a second viewing angle a second representation (3) of image and/or operating contents is displayed, wherein two spatially nested sub-images are generated for the two viewing angles and a first part of the image and/or operating elements are the same for the two viewing angles and a second part of the image and/or operating elements are different, **characterized in that** for the first part, all the image points of the dual-view display are used for displaying the image and/or operating elements per viewing angle, and for the second part only every second image point of the dual-view display is used per viewing angle.

2. The method according to claim 1, wherein in the first viewing angle a first representation (2) of the image and/or operating contents is displayed, and in the second viewing angle a second representation (3) of the same image and/or operating contents is displayed, and at least one operating element (8, 9) exerts the same function for different viewing angles and is located at the same position on the illustrated graphical user interface.

3. The method according to claim 2, wherein the representations (2, 3) of the same image and/or operating contents differ, in the two viewing angles, by a different degree of detail.

4. The method according to either claim 2 or claim 3, wherein the dual-view display in a vehicle is arranged between the driver and the passenger position in such a way that the first representation of the image and/or operating contents can be perceived from the driver position, and the second representation of the same image and/or operating contents can be perceived from the passenger position.

5. The method according to claim 4, wherein the display comprises the same operating contents for driver and passenger, wherein the two representations have a different degree of detail determined by the driving task and/or an individualization and/or the protection of the privacy of the driver or passenger.

6. A device for viewing-angle-dependent representation of a graphical user interface, comprising
- a dual-view display (1) with which, in a first viewing angle a first representation (2) of image and/or operating contents is displayed, and in a second viewing angle a second representation (3) of image and/or operating contents is displayed, wherein two spatially nested sub-images are generated for the two viewing angles;
- at least one operating element (4);
- a control unit (7) which is supplied with Information on a user input performed using the operating element; and
- an image generation and output unit (5, 6) which is controlled by the control unit (7) such that a first part of the image and/or control elements is the same for the two viewing angles and a second part of the image and/or operating elements is different,
**characterized in that**
- the image generation and output unit (5, 6) is controlled by the control unit (7) such that, for the first part, all the image points of the dual-view display are used for displaying the image and/or operating elements, per viewing angle, and for the second part only every second image point of the dual-view display is used, per viewing angle.

7. The device according to claim 6, wherein the dual-view display comprises a touch-sensitive surface for detecting operator inputs.

8. A motor vehicle, **characterized in that** it comprises a device according to either claim 6 or claim 7, or is configured to carry out a method according to any of claims 1 to 5.

## Revendications

1. Procédé de représentation d'une interface utilisateur graphique en fonction de l'angle d'observation sur un dispositif d'affichage à double vue, dans lequel une première représentation (2) des contenus d'image et/ou de commande est affichée sous un premier angle d'observation et une seconde représentation (3) des contenus d'image et/ou de commande est affichée sous un second angle d'observation, dans lequel pour les deux angles d'observation, deux images partielles imbriquées spatialement sont générées et, pour les deux angles d'observation, un première partie des éléments d'image et/ou de commande est identique et une seconde partie des éléments d'image et/ou de commande est différente, **caractérisé en ce que** pour la première partie, chaque angle d'observation de tous les points d'image du dispositif d'affichage à double vue est utilisé pour la représentation des éléments d'image et/ou de commande et, pour la seconde partie, chaque angle d'observation de chaque deuxième point d'image seulement du dispositif d'affichage à double vue est utilisé.

2. Procédé selon la revendication 1, dans lequel une première représentation (2) des contenus d'image et/ou de commande est affichée sous le premier angle d'observation et une seconde représentation (3) des mêmes contenus d'image et/ou de commande est affichée sous le second angle d'observation et au moins un élément de commande (8, 9) remplit la même fonction pour différents angles d'observation et est situé à la même position sur l'interface utilisateur graphique représentée.

3. Procédé selon la revendication 2, dans lequel les représentations (2, 3) des mêmes contenus d'image et/ou de commande sous les deux angles d'observation diffèrent par un niveau de détail différent.

4. Procédé selon l'une quelconque des revendications 2 ou 3, dans lequel le dispositif d'affichage à double vue est agencé dans un véhicule entre la position du conducteur et la position du passager de sorte que la première représentation des contenus d'image et/ou de commande puisse être perçue depuis la position du conducteur et la deuxième représentation des mêmes contenus d'image et/ou de commande puisse être perçue depuis la position du passager.

5. Procédé selon la revendication 4, dans lequel l'affichage comprend les mêmes contenus d'image pour le conducteur et le passager, dans lequel les deux représentations présentent un niveau de détail différent, qui est déterminé par la conduite et/ou une individualisation et/ou la protection de la vie privée du conducteur ou du passager.

6. Dispositif de représentation d'une interface utilisateur graphique en fonction de l'angle d'observation comprenant
- un dispositif d'affichage à double vue (1), dans lequel une première représentation (2) de contenus d'image et/ou de commande est affichée sous un premier angle d'observation et une seconde représentation (3) de contenus d'image et/ou de commande est affichée sous un second angle d'observation, dans lequel pour les deux angles d'observation, deux images partielles imbriquées spatialement sont générées ;
- au moins un élément de commande (4) ;
- une unité de contrôle (7), à laquelle une information est fournie par le biais d'une instruction d'utilisateur effectuée avec l'élément de commande ; et
- une unité de production et d'émission d'image (5, 6), qui est contrôlée par l'unité de contrôle (7) de manière à ce que, pour les deux angles d'observation, une première partie des éléments d'image et/ou de commande soit identique et une seconde partie des éléments d'image et/ou de commande soit différente,
**caractérisé en ce que**
- l'unité de production et d'émission d'image (5, 6) est contrôlée par l'unité de contrôle (7) de manière à ce que, pour la première partie, chaque angle d'observation de tous les points d'image du dispositif d'affichage à double vue soit utilisé pour la représentation des éléments d'image et/ou de commande et, pour la seconde partie, chaque angle d'observation de chaque deuxième point d'image uniquement du dispositif d'affichage à double vue soit utilisé.

7. Dispositif selon la revendication 6, dans lequel le dispositif d'affichage à double vue présente une surface tactile destinée à détecter les instructions d'utilisateur.

8. Véhicule automobile **caractérisé en ce qu'il** présente un dispositif selon la revendication 6 ou 7 ou qu'il est conçu pour exécuter un procédé selon l'une quelconque des revendications 1 à 5.
